# FASCICULE DE BREVET EUROPEEN

(11) **EP 2 464 436 B1**
(45) Date de publication et mention de la délivrance du brevet: **27.05.2015**
(21) Numéro de dépôt: 10762980.0
(22) Date de dépôt: 09.08.2010
(51) Int. Cl.: B01D 7/02, B01D 53/62, B01D 53/75, F25J 3/06

(54) **PROCEDE ET SYSTEME POUR L'EXTRACTION D'UNE SUBSTANCE PAR ANTISUBLIMATION ET FUSION**
VERFAHREN UND SYSTEM ZUR EXTRAKTION EINES STOFFES MITTELS ANTISUBLIMATION UND SCHMELZEN
METHOD AND SYSTEM FOR EXTRACTING A SUBSTANCE BY MEANS OF ANTI-SUBLIMATION AND MELTING

(30) Priorité: 13.08.2009 FR 0955666
(43) Date de publication de la demande: 20.06.2012
(73) Titulaire: Association Pour La Recherche Et Le Développement De Méthodes Et Processus Industriels "Armines", 75006 Paris (FR)
(72) Inventeur: CLODIC, Denis, F-91120 Palaiseau (FR); YOUNES, Mourad, F-78700 Conflans Sainte Honorine (FR); RIACHI, Youssef, F-91300 Massy (FR); BOU LAWZ KSAYER, Elias, F-75013 Paris (FR)
(74) Mandataire: Delumeau, François Guy
(86) Numéro de dépôt international: PCT/FR2010/051685
(87) Numéro de publication internationale: WO 2011/018577

(56) Documents cités:
- WO-A1-02/060561
- US-A- 2 039 889
- US-A- 2 089 558
- US-A- 2 116 191
- US-A- 2 738 658

## Description

### Arrière-plan de l'invention

L'invention se situe dans le domaine de la séparation des gaz et vise l'optimisation d'un procédé d'extraction, par anti-sublimation puis fusion, d'une ou de plusieurs substances comprises dans un mélange gazeux.

Le processus d'anti-sublimation correspond au passage direct d'un ou de plusieurs gaz de la phase gazeuse à la phase solide (procédé inverse de la sublimation).

L'invention porte plus particulièrement sur la gestion optimisée de processus de givrage (ou d'antisublimation) et de dégivrage comportant sublimation puis fusion sur une pluralité d'échangeurs, la mise en oeuvre de ces processus nécessitant la gestion temporelle d'opérations élémentaires distinctes.

Afin d'obtenir l'anti-sublimation d'une substance sur un échangeur, il est nécessaire que la substance soit à une pression partielle inférieure à celle définie par son point triple, et que la température de la surface de l'échangeur soit également inférieure à celle du point triple de la substance.

Différents gaz sont capables de subir un procédé d'anti-sublimation, tel que le CO₂, par exemple.

Le document WO 02/060561, en particulier, décrit un procédé frigorifique d'extraction du CO₂ présent dans les fumées d'unités de production d'énergie, le CO₂ étant givré puis dégivré successivement sur deux échangeurs.

Ce dispositif entraîne cependant des effets indésirables tels que des variations significatives de débit des fluides frigorigènes (ou des fluides frigoporteurs et caloporteurs) circulant dans le système frigorifique ainsi que des pertes indésirables d'énergie.

Ces effets sont d'autant plus indésirables que la taille des systèmes d'extraction est généralement très importante.

Les systèmes d'extraction du CO₂, par exemple, sur les fumées d'unités de production électrique fonctionnant au charbon, sont très volumineux. On rappellera à ce titre qu'une unité produisant 800 MW d'électricité avec une efficacité de conversion thermique/électrique de 44 % émet environ 620 t/h de CO₂ pour un débit de fumées de 2 millions de Nm³/h: La section de passage des fumées sur les échangeurs de givrage du CO₂ s'élève alors à 1 200 m² environ.

On retrouve des systèmes d'extraction présentant des tailles de même ordre dans de nombreux procédés industriels où la séparation de gaz est nécessaire et où les débits varient entre 100 000 et plusieurs millions de m³/h.

Il est donc essentiel de réduire au maximum les variations de débits des fluides frigorigènes ou des fluides frigoporteurs et caloporteurs, ainsi que les variations de débits des mélanges gazeux parcourant ce type d'installation.

### Objet et présumé de l'invention

L'invention a donc pour but principal de remédier aux problèmes identifiés ci-dessus.

Plus particulièrement, la présente invention propose un procédé d'extraction d'une substance comprise dans un mélange gazeux, dans un système d'extraction comportant :
un premier circuit d'alimentation pour l'alimentation d'un fluide frigorigène de givrage ou d'un fluide frigoporteur ;
un deuxième circuit d'alimentation pour l'alimentation d'un fluide frigorigène de dégivrage ou d'un fluide caloporteur ;
un troisième circuit d'alimentation pour l'alimentation du mélange gazeux ; et
2N enceintes, N étant un entier supérieur ou égal à 3, chaque enceinte comportant :
   - un échangeur pouvant être relié alternativement au premier circuit d'alimentation par une première paire de vannes, d'une part, et au second circuit d'alimentation par une seconde paire de vannes, d'autre part ;
   - une troisième paire de vannes connectant une entrée et une sortie de l'enceinte au troisième circuit d'alimentation, la troisième paire de vannes étant apte à contrôler la circulation du mélange gazeux sur l'échangeur à l'intérieur de l'enceinte ; et
   - une vanne d'évacuation permettant l'évacuation d'une phase gazeuse résiduelle ou d'un liquide associé à sa phase gazeuse -qui sont susceptibles de s'accumuler dans l'enceinte ;

le traitement du mélange gazeux dans chacune des enceintes comportant, de façon cyclique, les étapes successives suivantes :
- une étape de givrage, effectuée à une première température d'échangeur sous une première pression d'enceinte, permettant le passage direct de la substance de l'état gazeux à l'état solide, formant ainsi un dépôt solide de la substance sur l'échangeur, les première et troisième paires de vannes étant fermées à la fin de l'étape de givrage ;
- une étape de dégivrage comprenant la fermeture de l'enceinte et permettant le passage direct du dépôt solide à l'état gazeux puis le passage direct du dépôt solide à l'état liquide lorsque la température de l'échangeur et la pression dans l'enceinte deviennent respectivement supérieurs à la température et à la pression du point triple de la substance, accumulant ainsi la phase liquide de la substance dans l'enceinte, la seconde paire de vannes étant fermée à la fin de l'étape de dégivrage ;
- une étape de récupération comprenant l'ouverture de la vanne d'évacuation et permettant, d'une part, d'extraire la phase liquide et la phase gazeuse résiduelle qui se sont accumulées dans l'enceinte, et d'autre part, simultanément, de diminuer la pression dans l'enceinte de façon à ce qu'elle revienne à la première pression;
- une étape de diminution de la température de l'échangeur comprenant l'ouverture de la première paire de vannes de façon à ce que la température de l'échangeur revienne à la première température ;
le procédé comprenant en outre une étape générale de séquencement visant à séquencer le passage d'une étape à l'autre dans chacune des enceintes pour que le nombre d'enceintes en cours d'étape de givrage d'une part, et le nombre total d'enceintes en cours d'étape de dégivrage,
de récupération et de diminution de la température d'autre part, soient tout deux égaux à N, dans lequel, après un premier cycle, les deux conditions suivantes sont satisfaites tout au long du procédé :
- chacune des étapes de givrage, de dégivrage, de récupération et de diminution de la température est réalisée dans au moins une des enceintes, et
- chacune des enceintes réalise l'une desdites étapes selon l'étape de séquencement.

La présente invention permet d'extraire une substance capable de subir un processus d'anti-sublimation.

De manière plus générale, l'invention s'applique à toute substance comprise dans un mélange gazeux et caractérisée en ce que sa pression partielle et sa température sont inférieures respectivement à la pression et à la température de son point triple.

L'invention s'applique, par exemple :
- au CO₂ (ou à l'eau) contenu dans l'air, dans des fumées ou encore dans des gaz procédés ;
- au SO₂ contenu dans des fumées ou des gaz procédés ;
- au mercure gazeux contenu dans des fumées...

En analysant en détail un procédé de givrage et de dégivrage tel que décrit dans WO 02/060561, les inventeurs ont réussi à identifer un cycle comportant quatre étapes de fonctionnement distinctes :
- une étape de givrage, qui permet l'anti-subiimation à une première température d'une ou de plusieurs substances sur la surface externe d'un échangeur ;
- une étape de dégivrage, qui comprend une sous-étape de sublimation, entraînant une remontée en pression dans un volume clos, suivie d'une sous-étape de fusion ;
- une étape de récupération qui comprend la récupération du CO₂ en phase liquide ainsi que la récupération de la phase gazeuse résiduelle jusqu'à être revenu à la pression initiale du cycle ;
- et enfin une étape de diminution de la température de l'échangeur afin de remettre celui-ci à la première température du cycle.

Les inventeurs ont établi que la division dans le temps d'un procédé d'extraction selon quatre étapes de fonctionnement successives permet une meilleure gestion des surfaces d'échange mis en jeu et des débits de fluides frigorigènes associés au givrage d'une part et au dégivrage d'autre part.

En outre, il a été établi qu'en choisissant de manière appropriée le nombre d'enceintes entreprenant respectivement chacune des quatre étapes de fonctionnement tout au long du procédé conduit à des avantages significatifs.

L'invention permet en particulier la gestion coordonnée et optimisée de trois débits distincts : les débits internes des fluides frigorigènes de givrage ou fluides frigoporteurs, et des fluides frigorigènes de dégivrage ou fluides caloporteurs qui parcourent alternativement les échangeurs dans les enceintes au cours du procédé d'extraction, ainsi que le débit externe des gaz à séparer circulant sur la face externe des échangeurs frigorifiques.

Plus particulièrement, grâce à l'invention, les trois débits ci-dessus peuvent être constants dans le temps. Cette constance dans le temps entraîne une optimisation énergétique des échangeurs. De plus, la continuité des débits ainsi obtenue permet d'optimiser la composition notamment des mélanges de fluides frigorigènes (quand ceux-ci sont utilisés). Ces avantages s'expliquent notamment par le fait que, lorsque les débits décrits ci-dessus varient au cours du temps, les écarts de températures entre les fluides circulant varient également, ce qui génère des pertes d'efficacité dans le système.

La continuité et la constance des débits mis en jeu permettent en outre l'optimisation du fonctionnement des compresseurs dont le taux de compression peut être constant compte tenu de la constance des propriétés thermodynamiques à l'entrée de chaque compresseur.

Un fluide frigorigène (ou un mélange de fluides frigorigènes) est un fluide qui s'évapore quand il absorbe de la chaleur et se condense quand il cède de la chaleur.

Un fluide frigoporteur, en revanche, n'échange que de la chaleur sensible : il s'échauffe quand il absorbe de la chaleur et se refroidit quand il cède sa chaleur, et ce uniquement par chaleur sensible.

On comprendra dans la suite de la description que l'invention peut employer aussi bien des fluides frigorigènes de givrage et de dégivrage que des fluides frigoporteurs et caloporteurs.

Les inventeurs ont déterminé le séquencement optimal des quatre étapes de fonctionnement selon l'invention dans chacune des enceintes d'un système d'extraction.

Plus particulièrement, les inventeurs ont déterminé la répartition optimale du nombre d'enceintes d'un système d'extraction qui doivent entreprendre respectivement les étapes de givrage, de dégivrage, de récupération et de diminution de la température.

Comme expliqué précédemment, ce séquencement optimal (ou répartition optimale) permet en particulier d'obtenir des débits continus, ou quasi-permanents, des fluides frigorigènes ou des fluides frigoporteurs et caloporteurs qui circulent successivement dans les échangeurs et dans le premier et deuxième circuit d'alimentation jusqu'à l'aspiration par le compresseur.

L'invention permet ainsi de réduire de manière significative les variations des trois types de débit distincts lors de l'extraction d'une substance. En d'autres termes, l'invention permet d'améliorer de manière significative la répartition des débits mis en jeu tout au long du procédé d'extraction de la substance désirée.

Il convient de noter que l'optimisation du rendement énergétique du procédé d'extraction ne prend véritablement effet que lorsque les débits mis en jeu atteignent un régime établi dans le système, c'est-à-dire, une fois qu'un premier cycle a été réalisé.

A noter que l'on entend ici par «gaz à séparer» ou « mélange gazeux », un mélange de gaz dont on souhaite extraire une ou plusieurs substances par anti-sublimation.

A noter également que l'on s'intéressera dans la description au cas où l'on n'extrait qu'une seule substance du mélange gazeux parcourant les enceintes. L'homme du métier comprendra cependant que la présente invention s'applique également au cas où une pluralité de substances est extraite du mélange gazeux.

Le processus d'antisublimation ou de givrage implique l'opération inverse de dégivrage. Or, le fonctionnement d'un échangeur qui givre puis qui dégivre est par nature discontinu. Un des objets de l'invention est donc de rendre notamment la circulation de trois types de débits de fluide frigorigène continue afin d'optimiser énergétiquement le fonctionnement des systèmes frigorifiques produisant ces débits. Plus précisément, les trois types de débits de fluide frigorigène suivants sont mis en jeu :
- un échangeur en cours d'étape de givrage est parcouru par un premier débit de fluide frigorigène de givrage,
- un échangeur en cours d'étape de dégivrage est parcouru par un débit de fluide frigorigène de dégivrage,
- un échangeur en cours d'étape de récupération n'est parcouru par aucun débit de fluide frigorigène, et
- un échangeur en cours d'étape de remise en température est parcouru par un second débit de fluide frigorigène de givrage (i.e. un fluide frigorigène de givrage pour la remise en température de l'enceinte), ce second débit de fluide frigorigène de givrage présentant généralement des réglages différents en termes de pression de ceux appliqués au premier débit de fluide frigorigène de givrage.

Pour que la circulation de ces trois types de débits frigorigènes soit continue dans le système, il est tout d'abord nécessaire que les étapes du cycle soient effectuées sur au moins trois surfaces d'échangeur distinctes et fonctionnant en parallèle, chaque échangeur étant ou non parcouru par un des types de débit de fluide frigorigène selon l'étape en cours de réalisation (comme décrit ci-dessus).

De plus, il a été constaté que la durée de l'étape de givrage est égale à la durée des trois autres étapes du procédé (i.e. les étapes de dégivrage, de récupération et de remise en température). Comme les étapes de récupération et de remise en température peuvent être raccourcies et accomplies sur une seule surface d'échangeur pendant la durée du dégivrage et que l'étape de dégivrage peut être égale à la moitié de la durée de l'étape de givrage, il a été constaté que, pour avoir un fonctionnement continu sur la surfaces des d'échangeurs, il est nécessaire que le nombre d'échangeurs N soit au moins égal à 3 (N étant un nombre entier).

En outre, il a été constaté que lorsqu'il n'y a que trois échangeurs mis en jeu, le second débit de fluide frigorigène de givrage (i.e. celui utilisé pour la remise en température des échangeurs) est discontinu dans le système d'extraction puisqu'il n'est utilisé qu'une partie du temps. En effet, lorsqu'un des trois échangeurs réalise sur une séquence de temps donnée les étapes de récupération puis de remise en température, le second fluide frigorigène ne circule que pendant l'étape de remise en température. C'est la raison pour laquelle il est en réalité nécessaire que le système comprenne 2N échangeurs pour que les trois types de débit de fluide frigorigène soient effectivement continus.

On considère, par exemple, le cas où le système d'extraction comprend 6 enceintes (i.e. N=3). Dans ce cas, une fois un premier cycle réalisé, on a tout au long du procédé d'extraction :
- trois échangeurs en cours d'étape de givrage,
- un échangeur en cours d'étape de dégivrage,
- un échangeur en cours d'étape de récupération, et
- un échangeur en cours d'étape de remise en température.

Il y a alors, à tout moment, trois débits de fluide frigorigène de givrage de premier type, un débit de fluide frigorigène de givrage de deuxième type (pour la remise en température), et un débit de dégivrage.

Ainsi, comme expliqué précédemment, les échangeurs du système d'extraction de l'invention réalisent les étapes du procédé selon le cycle décrit ci-avant. A chaque séquence de temps prédéterminé (10 ou 15 minutes, par exemple), les vannes du système de l'invention peuvent changer de configuration afin que des enceintes procèdent à une nouvelle étape du cycle. Malgré le caractère cyclique du procédé, les débits décrits ci-dessus restent continus du point de vue du système d'extraction dans son ensemble.

Selon un mode de réalisation particulier, l'étape de givrage comprend en outre une sous-étape de mise sous vide de l'enceinte après la fermeture des première et troisième paires de vannes.

La réalisation de cette sous-étape de mise sous vide permet avantageusement d'évacuer des gaz résiduels indésirables présents dans l'enceinte en fin d'étape de givrage. Ainsi, à l'issue de l'étape de dégivrage, une enceinte peut contenir un gaz très pur, c'est-à-dire un gaz présentant une très forte concentration de la substance à extraire. De cette manière, il est possible de récupérer lors de l'étape de récupération une substance extraite de grande pureté, aussi bien sous forme liquide que sous forme de gaz résiduels.

La récupération d'un gaz résiduel de très grande pureté est avantageuse car ce gaz peut avoir une valeur commerciale significative. Par exemple, la réalisation de cette sous-étape de mise sous vide dans le procédé d'extraction de l'invention peut permettre d'extraire du CO₂ sous forme gazeuse de très grande pureté, ce qui présente une grande attractivité commerciale.

Par ailleurs, il a été reconnu qu'une fois un premier cycle effectué, le nombre d'enceintes en cours d'étape de dégivrage est égal à N', N' étant un entier qui dépend de la valeur de N.

Plus particulièrement, N' est tel que le rapport N'/N est égal à une valeur comprise entre un tiers et un demi, cette valeur étant fonction de la valeur de N.

On constate, par exemple, que le rapport N'/N est égal à la valeur minimale 1/3 lorsque N=3. De même, on constate, par exemple, que le rapport N'/N est égal à la valeur maximale ½ lorsque N=4.

Dans un mode de réalisation particulier, le procédé selon l'invention est tel que, après un premier cycle, le nombre d'enceintes en cours d'étape de dégivrage est égal à N/2 si N est égal à une puissance de deux.

Dans un autre mode de réalisation, le procédé selon l'invention est tel que, après un premier cycle, le nombre d'enceintes en cours d'étape de dégivrage est égal à (N/2)-1 si N est pair et n'est pas égal à une puissance de deux.

Dans un autre mode de réalisation, le procédé selon l'invention est tel que, après un premier cycle, le nombre d'enceintes en cours d'étape de dégivrage est égal à (N-1)/2 si N est impair.

On notera que, quelque soit le nombre choisi d'enceintes en cours d'étape de dégivrage, le nombre d'enceintes en cours d'étape de récupération et le nombre d'enceintes en cours d'étape de diminution de la température sont par définition toujours choisis de manière à complémenter le nombre d'enceintes en cours d'étape de dégivrage, c'est-à-dire, de manière à conserver l'égalité entre le nombre d'enceintes en cours d'étape de givrage et le nombre total d'enceintes en cours d'étape de dégivrage, de récupération et de diminution de la température.

A noter également que lorsque l'entier N est égal à une puissance de 2 (N étant alors supérieur ou égale à 4), le rapport N'/N est alors égal à ½ et on peut obtenir une répartition constructale des trois types de débit mis en jeu, c'est-à-dire une division par deux de ceux-ci. A ce titre, il convient de rappeler que le terme « constructale » trouve son origine dans la théorie d'Adrian Bejan. Cette théorie prévoit que l'architecture optimale d'accès aux flux par plusieurs branches est obtenue lorsque l'on maximise l'accès au flux de chaque branche. Une telle maximisation est possible lorsque chaque branche est divisée par deux car cela garantit la même longueur de trajet quelque soit l'itinéraire adopté par chacun des flux considérés.

La répartition constructale est d'autant plus avantageuse que, comme rappelé précédemment, la taille des systèmes d'extraction est généralement très importante.

On notera, par ailleurs, que lorsque N est égal à une puissance de 2, il n'est pas obligatoire que le nombre d'échangeurs en cours d'étape de récupération et le nombre d'échangeurs en cours d'étape de diminution de la température soient égaux à une puissance de 2. Lorsque certaines contraintes l'imposent, il est possible de choisir une répartition différente des étapes de récupération et de diminution de la température parmi les enceintes du système d'extraction, à condition cependant que le nombre total d'enceintes en cours d'étape de dégivrage, de récupération et de diminution de la température reste égal à N.

Dans un mode particulier de l'invention, la durée de l'étape de givrage est sensiblement égale à la durée cumulée desdites étapes de dégivrage, de récupération et de diminution de la température.

Il est en outre possible d'effectuer une étape préliminaire de détermination de la durée de l'étape de givrage, celle-ci étant déterminée à partir de la mesure d'une perte de charge maximale entre l'entrée et la sortie de l'enceinte pendant une étape de givrage.

Plus particulièrement, la durée d'une étape de givrage pour un système d'extraction donné peut être déterminée par l'expérience en mesurant la différence de pression du mélange gazeux entre l'entrée et la sortie d'une enceinte, et ce pendant une étape de givrage du procédé d'extraction.

Cette perte de charge s'explique par la croissance progressive du givre sur la surface externe des échangeurs en cours de givrage ainsi que par l'obstruction progressive des canaux de circulation du gaz.

Une valeur typique de perte de charge se situe entre +50 Pa et +500 Pa, ce seuil constituant le signal pour fermer par deux vannes (ou deux volets) l'entrée et la sortie de l'enceinte ayant achevé son étape de givrage.

Dans un mode particulier de réalisation, les différentes étapes du procédé d'extraction sont déterminées par des instructions de programmes d'ordinateurs.

En conséquence, l'invention vise aussi un programme d'ordinateur sur un support d'informations, ce programme étant susceptible d'être mis en oeuvre dans un système d'extraction ou plus généralement dans un ordinateur, ce programme comportant des instructions adaptées à la mise en oeuvre des étapes d'un procédé d'extraction tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

La présente invention vise en outre un système d'extraction d'une substance comprise dans un mélange gazeux, le système d'extraction comportant :
un premier circuit d'alimentation pour l'alimentation d'un fluide frigorigène de givrage ou d'un fluide frigoporteur ;
un deuxième circuit d'alimentation pour l'alimentation d'un fluide frigorigène de dégivrage ou d'un fluide caloporteur ;
un troisième circuit d'alimentation pour l'alimentation du mélange gazeux ; et
2N enceintes, N étant un entier supérieur ou égal à 3, chaque enceinte comportant :
   - un échangeur pouvant être relié au premier circuit d'alimentation par une première paire de vannes, d'une part, et au second circuit d'alimentation par une seconde paire de vannes, d'autre part ;
   - une troisième paire de vannes connectant une entrée et une sortie de l'enceinte au troisième circuit d'alimentation, la troisième paire de vannes étant apte à contrôler la circulation du mélange gazeux sur l'échangeur à l'intérieur de l'enceinte ; et
   - une vanne d'évacuation permettant l'évacuation d'une phase gazeuse résiduelle ou d'un liquide associé à sa phase gazeuse qui sont susceptibles de s'accumuler dans l'enceinte ;
le système d'extraction comprenant en outre des moyens de contrôle pour contrôler l'ouverture et la fermeture de chacune des vannes de façon à réaliser un procédé d'extraction comprenant, de manière cyclique, les étapes successives suivantes :
   - une étape de givrage, effectuée à une première température d'échangeur sous une première pression d'enceinte, permettant le passage direct de la substance de l'état gazeux à l'état solide, formant ainsi un dépôt solide de la substance sur l'échangeur, les première et troisième paires de vannes étant fermées à la fin de l'étape de givrage ;
   - une étape de dégivrage comprenant la fermeture de l'enceinte et permettant le passage direct du dépôt solide à l'état gazeux puis le passage direct du dépôt solide à l'état liquide lorsque la température de l'échangeur et la pression dans l'enceinte deviennent respectivement supérieurs à la température et à la pression du point triple de la substance, accumulant ainsi la phase liquide de la substance dans l'enceinte, la seconde paire de vannes étant fermée à la fin de l'étape de dégivrage ;
   - une étape de récupération comprenant l'ouverture de la vanne d'évacuation et permettant, d'une part, d'extraire la phase liquide et la phase gazeuse résiduelle qui se sont accumulées dans l'enceinte, et d'autre part, simultanément, de diminuer la pression dans l'enceinte de façon à ce qu'elle revienne à la première pression;
   - une étape de diminution de la température de l'échangeur comprenant l'ouverture de la première paire de vannes de façon à ce que la température de l'échangeur revienne à la première température ;
les moyens de contrôle étant configurés pour que chaque échangeur soit relié alternativement aux premier et second circuits d'alimentation,
les moyens de contrôle étant en outre configurés pour séquencer le passage d'une étape à l'autre dans chacune des enceintes pour que le nombre d'enceintes en cours d'étape de givrage d'une part, et le nombre total d'enceintes en cours d'étape de dégivrage, de récupération et de diminution de la température d'autre part, soient tout deux égaux à N,
dans lequel les moyens de contrôle sont également configurés pour que, après un premier cycle, les conditions suivantes soient satisfaites tout au long du procédé :
   - chacune des étapes de givrage, de dégivrage, de récupération et de diminution de la température est réalisée dans au moins une des enceintes, et
   - chacune des enceintes réalise l'une desdites étapes selon l'étape de séquencement.

Le système d'extraction selon l'invention et les modes de réalisation particuliers ci-dessous présentent les mêmes avantages que ceux mis en évidence vis-à-vis du procédé d'extraction et de ses modes particuliers.

Dans un mode de réalisation particulier, les moyens de contrôle sont en outre configurés pour que l'étape de givrage comprenne une sous-étape de mise sous vide de l'enceinte après ladite fermeture des première et troisième paires de vannes.

Par ailleurs, de même que pour le procédé d'extraction, il a été reconnu qu'une fois un premier cycle effectué, le nombre d'enceintes en cours d'étape de dégivrage dans le système d'extraction est égal à N', N' étant un entier qui dépend de la valeur de N.

Plus particulièrement, N' est tel que le rapport N'/N est égal à une valeur comprise entre un tiers et un demi, cette valeur étant fonction de la valeur de N.

On constate, par exemple, que le rapport N'/N est égal à la valeur minimale 1/3 lorsque N=3. De même, on constate, par exemple, que le rapport N'/N est égal à la valeur maximale ½ lorsque N=4.

Dans un mode de réalisation particulier, le système d'extraction selon l'invention est tel que, après un premier cycle, le nombre d'enceintes en cours d'étape de dégivrage est égal à N/2 si N est égal à une puissance de deux.

Dans un autre mode de réalisation, le système d'extraction selon l'invention est tel que, après un premier cycle, le nombre d'enceintes en cours d'étape de dégivrage est égal à (N/2)-1 si N est pair et n'est pas égal à une puissance de deux.

Dans un autre mode de réalisation, le système d'extraction selon l'invention est tel que, après un premier cycle, le nombre d'enceintes en cours d'étape de dégivrage est égal à (N-1)/2 si N est impair.

De même que pour le procédé d'extraction, le nombre d'enceintes en cours d'étape de récupération et le nombre d'enceintes en cours d'étape de diminution de la température sont toujours choisis de manière à complémenter le nombre d'enceintes en cours d'étape de dégivrage, c'est-à-dire, de manière à conserver l'égalité entre le nombre d'enceintes en cours d'étape de givrage et le nombre total d'enceintes en cours d'étape de dégivrage, de récupération et de diminution de la température.

Lorsque l'entier N est égal à une puissance de 2 (N étant alors supérieur ou égale à 4), le rapport N'/N est alors égal à ½ et on peut obtenir une répartition constructale des trois types de débit mis en jeu, c'est-à-dire une division par deux de ceux-ci.

Dans ce cas particulier, comme expliqué précédemment, il n'est pas obligatoire d'adopter une répartition constructale des étapes sur l'ensemble des enceintes du système d'extraction. Le choix dépendra en particulier des différentes contraintes imposées au système d'extraction. Il est cependant indispensable que le nombre total d'enceintes en cours d'étape de dégivrage, de récupération et de diminution de la température reste égal à N.

Dans un mode particulier de l'invention, la durée de l'étape de givrage est égale à la durée cumulée desdites étapes de dégivrage, de récupération et de diminution de la température.

En outre, le système d'extraction peut comprendre des moyens de mesure pour réaliser une étape préliminaire de détermination de la durée de l'étape de givrage, la durée de l'étape de givrage étant déterminée à partir de la mesure d'une perte de charge maximale entre l'entrée et la sortie de l'enceinte pendant une étape de givrage.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un exemple du système d'extraction selon l'invention, dans le cas où N=4.
- la figure 2 représente les principales étapes d'un exemple de procédé d'extraction selon l'invention appliqué à l'enceinte AA du système d'extraction de la figure 1 ;
- la figure 3 représente, sous la forme d'un tableau, un exemple de séquencement des étapes de fonctionnement du procédé d'extraction selon l'invention, dans le cas où N=4 ;
- la figure 4 représente, sous la forme d'un tableau, un exemple de séquencement des étapes de fonctionnement du procédé d'extraction selon l'invention, dans le cas où N=6 ;
- la figure 5 représente, sous la forme d'un tableau, un exemple de séquencement des étapes de fonctionnement du procédé d'extraction selon l'invention, dans le cas où N=3.

### Description détaillée de l'invention

La présente invention vise un système d'extraction d'une substance présente dans un mélange de gaz procédé ou de fumées, en provoquant l'anti-sublimation de cette substance sur la surface solide de plusieurs échangeurs frigorifiques.

Pour ce faire, l'anti-sublimation de la substance à extraire s'effectue à une température et à une pression inférieure à celles définies par le point triple de la substance considérée.

Le système d'extraction selon l'invention comporte 2N échangeurs, N étant un entier supérieur ou égal à 3.

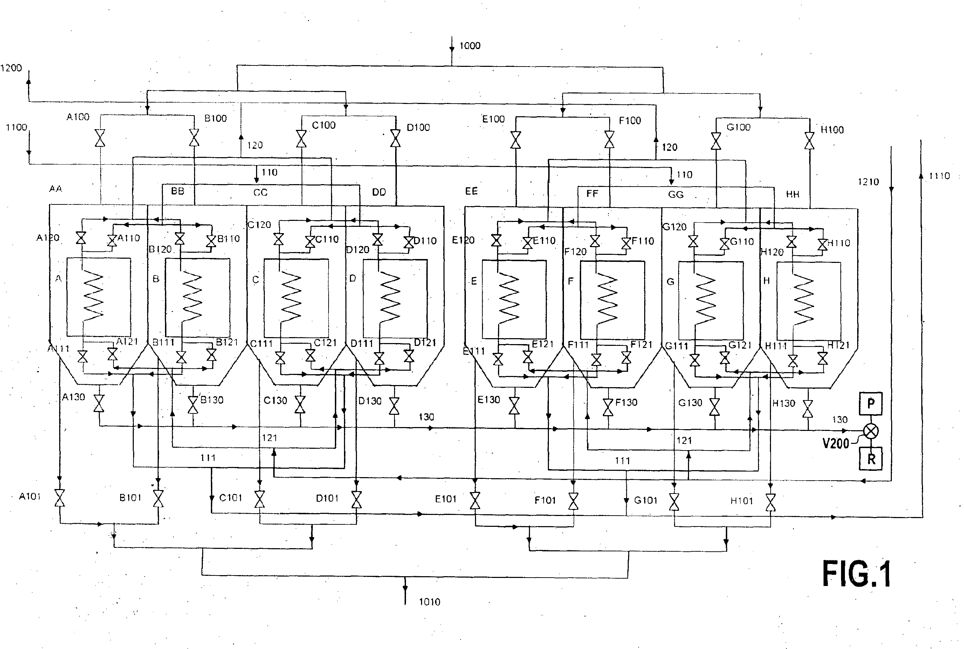

La figure 1 représente un exemple de système d'extraction selon l'invention. Dans cet exemple, le système d'extraction comprend huit échangeurs distincts, de sorte que N est égal à 4.

Les huit échangeurs ont été représentés dans la figure 1 (notés A, B, C, D, E, F, G et H).

Le système d'extraction de la figure 1 comprend en outre huit enceintes AA, BB, CC, DD, EE, FF, GG et HH dans lesquelles sont disposés les échangeurs frigorifiques A, B, C, D, E, F, G et H, respectivement.

Chaque échangeur frigorifique comprend un circuit dans lequel un fluide frigorigène (ou un mélange de fluides frigorigènes), un fluide frigoporteur ou un fluide caloporteur peut circuler. Ce circuit comporte typiquement des ailettes associées à des tubes dans lesquels peut circuler le fluide en question.

En outre, le débit des fluides frigorigènes ou frigoporteurs/caloporteurs circulant dans les échangeurs est contrôlé par une série de vannes décrites plus en détails ultérieurement.

En faisant circuler un fluide frigorigène ou frigoporteur à une température donnée, il est possible de contrôler la température de la surface externe de chaque échangeur.

Ainsi, lors de l'étape de givrage, on est capable d'abaisser la température du mélange gazeux circulant sur l'échangeur d'une enceinte donnée en faisant circuler un fluide frigorigène à basse température qui s'évapore ou en faisant circuler un fluide frigoporteur qui se réchauffe. On dit alors qu'un fluide frigorigène ou frigoporteur « de givrage » circule dans l'échangeur.

De même, il est possible, lors de l'étape de dégivrage, d'augmenter la température de la phase solide déposée sur l'échangeur d'une enceinte. Pour ce faire, on fait circuler un fluide frigorigène en état diphasique à relativement haute température (de 10 à 70 K au-dessus de la température du point triple de la substance à extraire), dans le circuit de l'échangeur, de sorte que ce fluide se condense. De manière alternative, on peut faire circuler dans l'échangeur un fluide caloporteur qui se refroidit.

Lors de l'étape de dégivrage, on dit qu'un fluide frigorigène ou un fluide caloporteur de « dégivrage » circule dans l'échangeur.

Dans la suite de la description, on comprendra que lorsqu'il est question de fluides frigorigènes de givrage et de fluides frigorigènes de dégivrage, il est possible de remplacer ceux-ci par des fluides frigoporteurs et des fluides caloporteurs, respectivement.

De plus, on s'intéressera par la suite au cas où un seul fluide frigorigène de givrage (ou frigoporteur) et un seul fluide frigorigène de dégivrage (ou caloporteur) peut circuler de manière alternée dans les échangeurs. On comprendra cependant qu'il est possible de faire circuler des mélanges de fluides frigorigènes de givrage (ou de fluides frigoporteurs) ou des mélanges de fluides frigorigènes de dégivrage (ou de fluides caloporteurs).

Par ailleurs, le circuit d'alimentation 1000 permet d'acheminer le mélange gazeux, dont on souhaite extraire une substance, à l'intérieur des enceintes AA, BB, CC, DD, EE, FF, GG et HH.

L'accès du mélange gazeux est contrôlé en amont des enceintes AA, BB, CC, DD, EE, FF, GG et HH par les vannes A100, B100, C100, D100, E100, F100, G100 et H100, respectivement, que l'on nomme collectivement les vannes de gaz V100.

Le mélange gazeux situé à l'intérieur des enceintes AA, BB, CC, DD, EE, FF, GG et HH peut ensuite être extrait. Le contrôle de cette extraction se fait à l'aide des vannes A101, B101, C101, D101, E101, F10, G101 et H101, respectivement, que l'on nomme collectivement les vannes de gaz V101.

Le mélange gazeux ainsi extrait peut ensuite être réacheminé via le circuit d'évacuation 1010 vers une autre enceinte entreprenant une autre étape de fonctionnement.

En outre, l'évacuation, depuis les enceintes AA, BB, CC, DD, EE, FF, GG et HH, de la substance extraite du mélange gazeux dans les enceintes et de la phase gazeuse résiduelle, est contrôlée par les vannes A130, B130, C130, D130, E130, F130, G130 et H130, respectivement, que l'on nomme collectivement les vannes V130.

La substance ainsi extraite, qui se présente à l'état liquide et en fin de récupération en phase gazeuse, est acheminée via le circuit de récupération 130 vers un réservoir R.

De plus, dans un mode de réalisation préféré, le circuit de récupération 130 est en outre raccordé à une pompe à vide P via une vanne V200. A l'aide de cette pompe à vide, il est possible de mettre les enceintes du système sous vide. L'intérêt de cette pompe et d'une telle mise sous vide sera décrit plus en détails ultérieurement.

Par ailleurs, le circuit de fluide frigorigène comprend deux circuits d'alimentation distincts: un circuit de givrage dans lequel circule un fluide frigorigène de givrage (ou un fluide frigoporteur), et un circuit de dégivrage dans lequel circule un fluide frigorigène de dégivrage (ou un fluide caloporteur).

Le circuit de givrage comprend le circuit d'alimentation 1210, les branches 121 et 120 ainsi que le circuit de retour 1200.

Le circuit de dégivrage comprend le circuit d'alimentation 1100, les branches 110 et 111 et le circuit de retour 1110.

Plus particulièrement, le circuit d'alimentation 1210 alimente sous haute pression la branche 121 en fluide frigorigène de givrage. Ce fluide frigorigène de givrage est envoyé vers les échangeurs en cours de givrage ou procédant à l'étape de diminution de la température de l'échangeur.

L'accès du fluide de givrage aux échangeurs A, B, C, D, E, F, G et H est contrôlé respectivement par les vannes A121, B121, C121, D121, E121, F121, G121 et H121 que l'on nomme collectivement les vannes V121.

Ces vannes V121 correspondent à des vannes de détente qui permettent de faire passer le fluide frigorigène de givrage de la haute à la basse pression du système. Ces vannes de détente permettent ainsi au fluide de givrage circulant dans l'échangeur de s'évaporer.

De manière alternative, les vannes V121 permettent au fluide frigoporteur circulant dans l'échangeur lors de l'étape de givrage de s'échauffer. Dans ce cas particulier, les vannes V121 ne sont pas des vannes de détente mais des vannes de contrôle du débit.

De plus, l'extraction du fluide frigorigène de givrage évaporé (ou du fluide frigoporteur réchauffé) provenant des échangeurs A, B, C, D, E, F, G et H est contrôlée respectivement par les vannes A120, B120, C120, D120, E120, F120, G120 et H120 que l'on nomme collectivement les vannes V120.

Le fluide frigorigène est ensuite retourné vers un compresseur (non représenté) via la branche de retour 120 puis le circuit de retour 1200.

Grâce à l'aménagement de 2N échangeurs (N≥3) dans le système d'extraction, le débit de fluide frigorigène est constant au cours du temps et présente des propriétés thermodynamiques constantes, ce qui permet au compresseur du système de fonctionner en régime établi. Un tel régime permet, d'une part, au compresseur de fonctionner sur un régime de taux de compression optimal, et d'autre part, aux échangeurs du système de fonctionner en régime établi. De plus, lorsque des mélanges de fluides frigorigènes sont utilisés, la composition de ces mélanges peut alors être optimisée car ces fluides se trouvent dans des conditions de régime permanent.

Lorsqu'un fluide frigoporteur est utilisé pour abaisser la température de l'échangeur, celui-ci est ensuite retourné par la même branche 120 vers un échangeur de refroidissement non représenté. Cet échangeur permet de refroidir le fluide frigoporteur afin que celui-ci puisse être réintroduit dans le système. De la même manière, la constance du débit de fluide frigoporteur permet l'optimisation du fonctionnement des échangeurs associés au refroidissement de ce frigoporteur.

Par ailleurs, le circuit 1100 et la branche 110 alimentent les échangeurs en fluide frigorigène en phase vapeur ou partiellement liquide-vapeur en condition de condensation (i.e. en fluide frigorigène de dégivrage).

L'accès du fluide frigorigène de dégivrage aux échangeurs A, B, C, D, E, F, G et H est contrôlé respectivement par les vannes A110, B110, C110, D110, E110, F110, G110 et H110 que l'on nomme collectivement les vannes V110.

De plus, l'extraction du fluide frigorigène de dégivrage provenant des échangeurs A, B, C, D, E, F, G et H est contrôlée respectivement par les vannes A111, B111, C111, D111, E111, F111, G111 et H111 que l'on nomme collectivement les vannes V111.

Le fluide frigorigène de dégivrage ainsi collecté, dont le titre liquide est accru, est retourné via la branche de retour 111 et le circuit de retour 1110 vers un échangeur ou une série d'échangeurs à plus haute température.

Grâce à l'arrangement en 2N échangeurs (N≥3) dans le système d'extraction de l'invention, le fluide frigorigène de dégivrage présente un débit masse constant dans les circuits 1100, 110, 111 et 1110.

Lorsqu'un fluide caloporteur est utilisé lors de l'étape de dégivrage, le fluide caloporteur refroidi est retourné vers un échangeur de réchauffement non représenté. Une fois réchauffé, ce fluide caloporteur peut être réintroduit dans le système d'extraction.

Dans l'exemple décrit ici, les séries de vannes identifiées ci-dessus sont configurées de manière à permettre :
- une circulation alternée du mélange gazeux successivement dans les quatre échangeurs AA, BB, CC, DD, EE, FF, GG et HH ;
- une circulation du fluide frigorigène de givrage dans les échangeurs des enceintes en cours de givrage ;
- une circulation concomitante du fluide frigorigène de givrage dans les échangeurs des enceintes procédant à l'étape de diminution de la température, la durée de cette étape s'élevant à un quart de la durée de l'étape de givrage ;
- une circulation du fluide frigorigène de dégivrage dans les échangeurs des enceintes en cours de dégivrage, la durée l'étape de dégivrage s'élevant à la moitié de la durée de l'étape givrage ;
- l'absence de circulation, pendant un quart de la durée de l'étape de givrage, de fluide, frigorigène dans les échangeurs des enceintes en cours de récupération de la phase liquide et la phase gazeuse résiduelle (la vanne d'évacuation 130 étant ouverte).

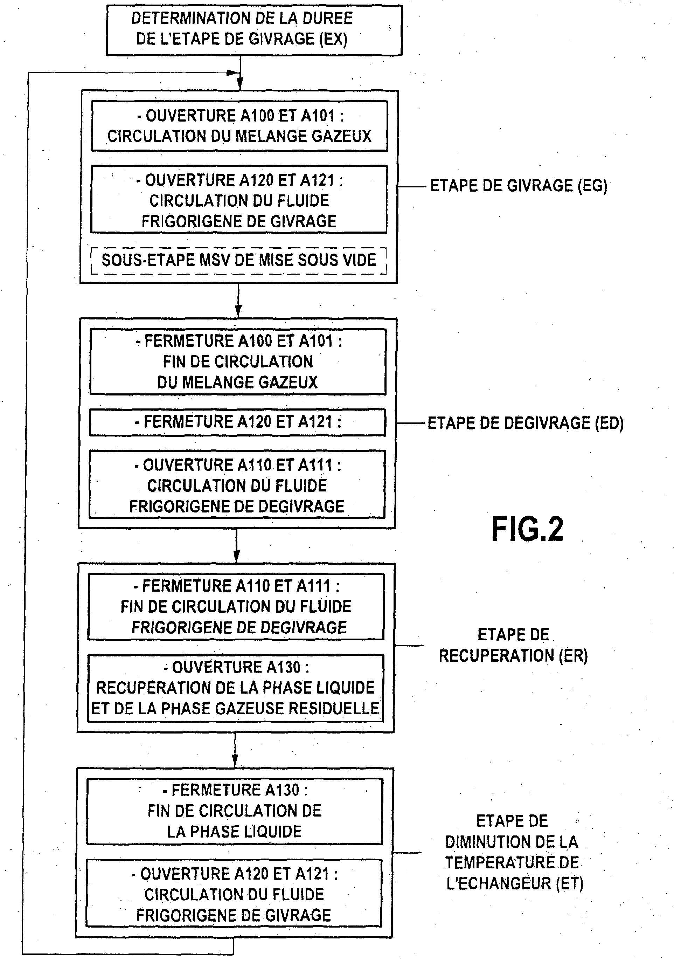

Nous allons à présent, en référence à la **figure 2**, décrire les principales étapes d'un exemple du procédé d'extraction selon l'invention appliqué à l'enceinte AA du système d'extraction de la figure 1.

Comme expliqué précédemment, il a été établi que le procédé d'extraction s'articule en un cycle de quatre étapes de fonctionnement successives.

Dans l'exemple décrit ici, on procède tout d'abord à une étape préliminaire (EX) avant d'effectuer les différentes étapes de fonctionnement composant le cycle du procédé d'extraction.

Cette étape préliminaire permet de déterminer la durée que l'on va fixer à l'étape de givrage qui va suivre.

Comme décrit précédemment, cette durée peut être déterminée à partir de la mesure de la perte de charge entre l'entrée et la sortie de l'enceinte AA, en cours de givrage. Cette perte de charge résulte de l'obstruction progressive des canaux de circulation du gaz ainsi qu'au dépôt progressif de la couche solide sur la surface de l'échangeur.

On procède ensuite à la première étape de fonctionnement du cycle : l'étape de givrage (étape EG).

Cette étape nécessite que l'on fasse circuler le mélange gazeux dans l'enceinte AA. Pour ce faire, on ouvre les vannes d'entrée et de sortie A100 et A101 reliant l'enceinte AA au circuit d'alimentation 1000 du mélange gazeux.

Le mélange gazeux est alors refroidi lors de son passage sur la face externe de l'échangeur A. Le mélange gazeux est refroidi à une première température et à une première pression de manière à ce que la substance à extraire se solidifie sur l'échangeur A : on assiste ainsi à l'anti-sublimation de la substance sur l'échangeur 1.

A noter que la première température et la première pression sont respectivement inférieures à la température et à la pression définies par le point triple de la substance à extraire.

Pour refroidir le mélange gazeux, on ouvre les vannes A121 et A120 reliant l'échangeur au circuit de fluide frigorigène de givrage ou de fluide frigoporteur.

Le fluide frigorigène de givrage circulant dans l'échangeur s'évapore, créant ainsi la puissance frigorifique nécessaire au givrage de la substance sur la surface de l'échangeur A.

De manière alternative, c'est un fluide frigoporteur qui circule dans l'échangeur et qui crée la puissance frigorifique nécessaire en se réchauffant.

Dans le mode de réalisation décrit ici, on procède en outre à une sous-étape (notée MSV) de mise sous vide de l'enceinte AA à la fin de l'étape de givrage, ce afin d'extraire les gaz résiduels présents dans cette enceinte. Pour se faire, on procède en particulier à :
- l'ouverture de la vanne d'évacuation A130,
- la fermeture des vannes A121, A120, A100 et A101, et
- à la mise en marche de la pompe à vide P.

La vanne V200 permet de contrôler la connexion du circuit d'évacuation 130 avec, soit la pompe à vide P, soit le réservoir P. Lorsque l'on procède à la sous-étape MSV de mise sous vide, cette vanne V200 connecte la pompe à vide P avec le circuit d'évacuation 130.

Cette sous-étape MSV de mise sous vide permet typiquement d'abaisser la pression dans l'enceinte à 50 Pa absolus. La durée de cette mise sous vide est de l'ordre de 20 secondes, par exemple, mais dépend de divers paramètres tels que la puissance de pompage de la pompe P notamment. Le vide relatif ainsi obtenu permet d'évacuer le mélange gazeux résiduel contenu dans l'enceinte AA. Ce mélange gazeux résiduel peut, par exemple, être traité une fois récupéré.

On notera cependant que cette sous-étape MSV de mise sous vide est optionnelle. L'intérêt de cette sous-étape de mise sous vide sera décrit plus en détails ultérieurement.

La seconde étape de fonctionnement du cycle correspond à l'étape de dégivrage (étape ED).

Dans ce mode de réalisation, la vanne A130 est fermée au début de l'étape ED de dégivrage. On comprendra cependant que cette fermeture n'est nécessaire que parce que la vanne A130 a été ouverte en fin d'étape de givrage dans l'exemple considéré ici afin de réaliser la sous-étape MSV de mise sous vide. En revanche, lorsque la sous-étape MSV de mise sous vide n'est pas réalisée en fin d'étape de givrage, la vanne A130 reste fermée pendant toute la durée de l'étape de givrage, de sorte que la vanne A130 est déjà fermée lorsque l'on débute l'étape de dégivrage.

De plus, tout au long l'étape de dégivrage, les vannes A100 et A101 de l'enceinte AA sont fermées, de sorte que cette enceinte n'est plus alimentée en mélange gazeux. L'étape s'effectue ainsi en enceinte fermée.

Les vannes A121 et A120 sont également fermées de sorte que l'échangeur A n'est plus alimenté en fluide frigorigène de givrage.

Par ailleurs, les vannes A111 et A110, reliant l'échangeur A au circuit d'alimentation de fluide frigorigène de dégivrage, sont ouvertes afin de réchauffer l'échangeur A.

L'augmentation en température du dépôt solide de la substance présent sur l'échangeur A entraîne la sublimation du dépôt, à savoir le passage direct de la substance de la phase solide à la phase gazeuse.

Le processus de sublimation en milieu clos entraîne en outre l'augmentation de la pression dans l'enceinte AA qui, comme expliqué précédemment, était initialement sous vide au début de l'étape de dégivrage.

La sublimation du dépôt solide toujours présent sur l'échangeur A fait alors monter la pression dans l'enceinte AA. Lorsque la pression du point triple de la substance est atteinte dans l'enceinte, le dépôt solide entreprend un processus de fusion, de sorte que la substance passe directement de la phase solide à la phase liquide.

Pour ce faire, le fluide frigorigène de dégivrage s'engage dans l'échangeur en état diphasique et à relativement haute température, typiquement 10 à 70 K au-dessus de la température du point triple de la substance.

Le fluide frigorigène de dégivrage se condense en cédant sa chaleur à l'échangeur permettant ainsi la sublimation puis la fusion de la substance givrée sur la surface externe de l'échangeur.

De manière alternative, c'est un fluide caloporteur à une température de 10 à 70 K supérieure à celle du point triple qui circule dans l'échangeur. En refroidissant, le fluide caloporteur permet la sublimation puis la fusion de la substance givrée sur l'échangeur.

L'étape de dégivrage est gérée temporellement via le triplet débit/température/titre vapeur du fluide frigorigène de dégivrage circulant dans l'échangeur A, ou via le couple débit/température d'entrée du fluide caloporteur.

La troisième étape de fonctionnement correspond à l'étape de récupération (étape ER).

Plus particulièrement, cette étape comprend la récupération de la phase liquide de la substance dégivrée accumulée dans le réservoir après l'étape de dégivrage.

Cette étape comprend en outre, simultanément à la récupération de la phase liquide, la récupération de la phase gazeuse résiduelle dans l'enceinte afin de revenir à la première pression du cycle du procédé d'extraction.

La vanne A130 est ouverte, permettant ainsi l'évacuation de la phase liquide et de la phase gazeuse résiduelle. La vanne V200 est configurée de manière à ce que les phases liquide et gazeuse ainsi récupérées soient évacuées vers le réservoir R.

On notera ici que la récupération de la phase gazeuse résiduelle s'effectue jusqu'à ce que la pression dans l'enceinte AA revienne à la pression des circuits 1000 et 1010.

Par ailleurs, lors de l'étape de récupération, les vannes A100, A101, A110, A111, A120 et A121 sont fermées. Par conséquent, le mélange gazeux ne circule pas dans l'enceinte AA et aucun fluide frigorigène ne circule dans l'échangeur A.

A noter que, lorsqu'aucune sous-étape de mise sous vide n'est précédemment réalisée lors de l'étape de givrage, des gaz résiduels sont présents dans l'enceinte AA au début de l'étape de dégivrage. Ces gaz comprennent majoritairement de l'azote et de l'oxygène, par exemple. Or, ces gaz ne sont pas capables de passer à l'état solide comme la substance à extraire (du CO₂, par exemple), lors de l'étape de dégivrage. Ainsi, comme indiqué précédemment, la réalisation de cette sous-étape (MSV) de mise sous vide permet avantageusement d'évacuer ces gaz résiduels indésirables à l'aide de la pompe à vide P. Ainsi, à l'issue de l'étape de dégivrage, l'enceinte AA contient un gaz très pur, c'est-à-dire un gaz présentant une très forte concentration de la substance à extraire. De cette manière, il est possible de récupérer lors de l'étape de récupération ER une substance extraite de grande pureté, aussi bien sous forme liquide que sous forme de gaz résiduels.

La récupération d'un gaz résiduel de très grande pureté est avantageuse car ce gaz peut avoir une valeur commerciale significative. Par exemple, la réalisation de cette sous-étape MSV de mise sous vide dans le procédé d'extraction de l'invention peut permettre d'extraire du CO₂ sous forme gazeuse de très grande pureté, ce qui présente une grande attractivité commerciale.

Finalement, la quatrième étape correspond à l'étape de diminution de la température de l'échangeur (étape ET).

Pour ce faire, on ouvre les vannes A120 et A121 afin de faire circuler le fluide frigorigène de givrage dans l'échangeur A.

Lorsque la température de l'échangeur A a atteint une température proche de la première température de début de cycle, on peut amorcer un nouveau cycle du procédé d'extraction en configurant à nouveau les vannes pour effectuer une étape de givrage (ouverture des vannes de gaz A100 et A101).

Le procédé d'extraction selon l'invention comprend en outre une étape générale de séquencement (non représentée sur la figure 2) visant à séquencer le passage d'une étape à l'autre dans chacune des enceintes.

Le séquencement est tel que le nombre d'enceintes en cours d'étape de givrage d'une part, et le nombre total d'enceintes en cours d'étape de dégivrage, de récupération et de diminution de la température d'autre part, sont tout deux toujours égaux à N. Cette égalité n'est cependant atteinte qu'une fois un premier cycle réalisé, de sorte que le système d'extraction se place en régime stationnaire. Comme expliqué précédemment, cette égalité permet d'améliorer de façon significative le rendement énergétique du procédé d'extraction.

De plus, le séquencement mentionné ci-dessus est tel que, après un premier cycle, les conditions suivantes sont satisfaites tout au long du procédé d'extraction :
- chacune des étapes de givrage, de dégivrage, de récupération et de diminution de la température est réalisée dans au moins une des enceintes du système, et
- chacune des enceintes du système réalise l'une des étapes selon le cycle d'étapes et le séquencement décrit ci-dessus.

On notera en outre que le rapport du nombre d'enceintes effectuant chacune des quatre étapes de fonctionnement tout au long du procédé d'extraction correspond également au rapport de durée entre chacune de ces étapes.

Ainsi, la durée cumulée des étapes de dégivrage, de récupération et de diminution de la température dans un système d'extraction est toujours égale à la durée de l'étape de givrage. On notera que cette égalité est également satisfaite lorsque la sous-étape MSV de mise sous vide décrite ci-avant est réalisée en fin d'étape de givrage. En effet, la durée de cette sous-étape est négligeable par rapport à la durée du reste de l'étape de givrage (i.e. la durée pendant laquelle la substance se dépose sous forme solide sur l'échangeur). La durée de l'étape de givrage peut typiquement être de l'ordre de 10 à 15 minutes tandis que la sous-étape de mise sous vide dure, par exemple, 20 secondes environ. La sous-étape MSV de mise sous vide s'effectue donc de manière quasi-instantanée vis-à-vis de l'étape de givrage dans son ensemble.

Par ailleurs, une fois un premier cycle effectué, le nombre d'enceintes en cours d'étape de dégivrage dans un système d'extraction est égal à N', N' étant un entier qui dépend de la valeur de N.

Plus particulièrement, N' est tel que le rapport N'/N est égal à une valeur comprise entre un tiers et un demi, la valeur du rapport étant fonction de la valeur de N.

Il en découle que, quelque soit le nombre d'échangeurs 2N présents dans le système d'extraction (avec N supérieur ou égal à trois), la durée de l'étape de dégivrage varie toujours entre un tiers et la moitié de la durée de l'étape de givrage.

On constate, par exemple, que le rapport N'/N est égal à la valeur minimale 1/3 lorsque N=3.

De même, on constate, par exemple, que le rapport N'/N est égal à la valeur maximale ½ lorsque N=4.

Concernant la valeur de N, trois cas distincts sont envisagés :
- N est égal à une puissance de 2 : dans ce cas, le procédé d'extraction est tel que le nombre d'enceintes N' en cours d'étape de dégivrage est égal à N/2. Il en découle que la durée de l'étape de dégivrage est sensiblement égale à la durée de l'étape de givrage.
- N est pair et n'est pas égal à une puissance de deux : dans ce cas, le procédé d'extraction est tel que le nombre d'enceintes N' en cours d'étape de dégivrage est égal à (N/2)-1.
- N est impair : dans ce cas, le procédé d'extraction est tel que le nombre d'enceintes N' en cours d'étape de dégivrage est égal à (N-1)/2.

En outre, le nombre d'enceintes en cours d'étape de récupération et le nombre d'enceintes en cours d'étape de diminution de la température sont par définition toujours choisis de manière à complémenter le nombre d'enceintes en cours d'étape de dégivrage.

Cela signifie que, tout au long du procédé, le nombre d'enceintes en cours d'étape de récupération et le nombre d'enceintes en cours d'étape de diminution de la température sont fixés de manière à conserver l'égalité entre le nombre d'enceintes en cours d'étape de givrage et le nombre total d'enceintes en cours d'étape de dégivrage, de récupération et de diminution de la température.

On notera cependant que les rapports ci-dessus en termes de nombre d'enceintes effectuant chacune des étapes de fonctionnement ne peuvent être respectés qu'une fois qu'un premier cycle a été effectué dans le système d'extraction considéré. De cette manière, il est possible d'avoir, à un instant donné, plusieurs enceintes effectuant chacune des quatre étapes de fonctionnement du cycle du procédé d'extraction.

De telles répartitions d'étape de fonctionnement, tout au long d'un procédé d'extraction, sur les enceintes d'un système d'extraction permettent d'obtenir des débits continus des fluides frigorigènes de givrage et de dégivrage (ou de fluides frigoporteurs et caloporteurs) sur l'ensemble des échangeurs.

Cette continuité des débits conduit ainsi à un régime permanent d'alimentation des échangeurs et du (ou des) compresseur(s) mis en jeu dans le système, ce qui ouvre d'importantes voies d'optimisation énergétique.

En outre, la durée fixée pour l'étape de dégivrage est fonction du débit, du titre vapeur initial et de la température du fluide frigorigène de dégivrage circulant dans l'échangeur lors de l'étape de dégivrage, ou de la température et du débit du caloporteur.

De même, la durée fixée pour l'étape de récupération est également fonction du débit de récupération de la phase liquide et de la phase gazeuse résiduelle tandis que la durée fixée pour l'étape de diminution de la température est également fonction du débit de fluide frigorigène de givrage (ou de frigoporteur) pour remettre l'échangeur à la première température du cycle.

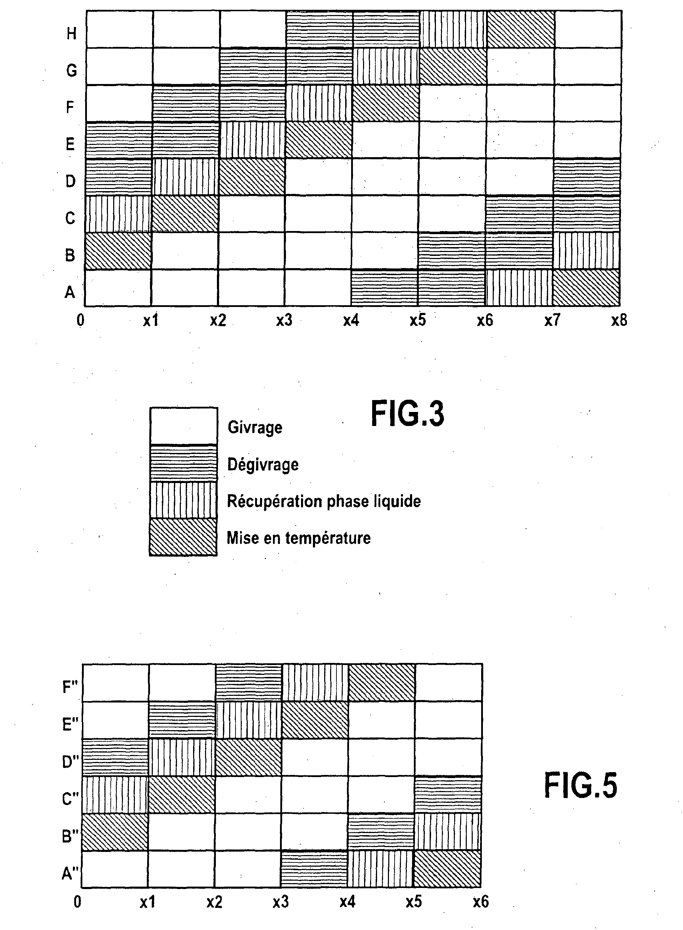

Nous allons à présent décrire, en référence à la **figure 3****,** la répartition sur huit échangeurs (et donc huit enceintes) des principales étapes du procédé d'extraction selon l'invention.

Plus particulièrement, la figure 3 représente, sous la forme d'un tableau, les différentes étapes de fonctionnement réalisées successivement et de manière cyclique pour chacun des huit échangeurs A, B, C, D, E, F, G et H du système d'extraction de la figure 1.

Dans la figure 3, huit intervalles de temps x1 à x8 ont été représentés sur l'axe horizontal qui correspond à l'axe du temps.

Sur l'axe vertical sont indiqués chacun des huit échangeurs du système d'extraction.

A chaque intervalle de temps x1 à x8 considéré, les échangeurs A à H effectuent une étape de fonctionnement particulière, ce qui se traduit par une configuration spécifique de l'ensemble des vannes du système d'extraction telles que décrites en référence à la figure 1.

Lors du premier intervalle de temps x1, l'échangeur A procède à l'étape de givrage (début de l'étape), l'échangeur B à l'étape de diminution en température, l'échangeur C à l'étape de récupération de la phase liquide de la substance à extraire et l'échangeur D à l'étape de dégivrage (deuxième moitié de l'étape).

Le tableau ci-dessous synthétise les positions d'ouverture ou de fermeture de l'ensemble des vannes du système d'extraction illustré en figure 1, et ce pour l'intervalle de temps x1 tel que décrit en figure 3.

Les positions « ouverte » et « fermée » des différentes vannes sont indiquées par les lettres « O » et « F », respectivement.

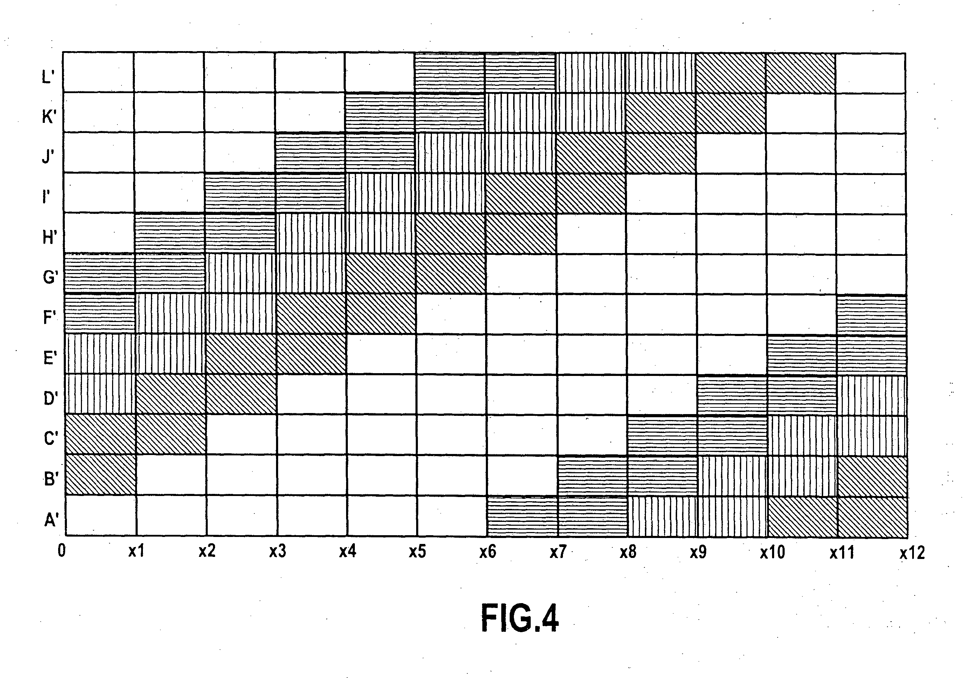

**Tableau 1 : configuration des vannes du système d'extraction de la figure 1 pendant l'intervalle x1 définit dans la figure 4**

| Phase des Echangeurs Lors de la séquence x1 | Vannes gaz | Vannes et détendeurs frigorifiques évaporation | Vannes frigorifiques condensation | Vannes récupération liquide et gaz |
|---|---|---|---|---|
| Echangeur A - étape de givrage (1/4) | A100 : O | A121 : O | A110 : F | A130 : F |
| | A101 : O | A120 : O | A111 : F | |
| Echangeur B - étape de diminution de la température (1/1) | D100 : F | D121 : O | D110 : F | D130 : F |
| | D101 : F | D120 : 0 | D111 : F | |
| Echangeur C - étape de récupération phases liquide et gaz (1/1) | C100 : F | C121 : F | C110 : F | C130 : O |
| | C101 : F | C120 : F | C111 : F | |
| Echangeur D - étape de dégivrage (2/2) | | D121 : F | D110 : O | D130 : F |
| | D101 : F | D120 : F | D111 : O | |

Les quatre étapes de fonctionnement du procédé d'extraction sont effectuées de la même manière sur chacun des huit échangeurs du système d'extraction.

Il est donc possible, à partir du tableau 1, de déterminer la configuration des vannes du système d'extraction pendant chaque intervalle de temps x1 à x8. On notera que le tableau ci-dessus ne comprend pas la configuration des vannes lorsque l'on procède à la sous-étape MSV de mise sous vide en fin d'étape de givrage. Cette sous-étape optionnelle a été volontairement omise car elle n'a pas d'impact significatif sur le séquencement général des étapes.

Par ailleurs, la figure 3 montre, par exemple, les décalages temporels entre les échangeurs A, B, C, D, E, F, G et H qui se propagent sur les huit intervalles de temps x1 à x8.

En étudiant les étapes successives réalisées de manière cyclique pour chaque échangeur, on constate que, pour chaque échangeur, le procédé d'extraction se déroule en deux grandes séquences temporelles : l'étape de givrage suivit des trois autres étapes de fonctionnement, à savoir les étapes de dégivrage, de récupération et de diminution en température.

On retrouve bien ici que, tout au long du procédé d'extraction, le nombre d'enceintes (ou d'échangeurs) en cours d'étape de givrage est égal au nombre total d'enceintes en cours d'étape de dégivrage, de récupération et de diminution de la température.

Par ailleurs, dans ce cas particulier, N est un entier pair. On a donc, tout au long du procédé :
- N=4 enceintes en cours d'étape de givrage ; et
- N/2=2 enceintes en cours d'étape de dégivrage.

En outre, le nombre d'enceintes en cours d'étape de récupération et le nombre d'enceintes en cours d'étape de diminution de la température sont chacun choisis de manière à ce que le nombre total d'enceintes au cours d'étape de dégivrage, de récupération et de diminution de la température soit égal à 4.

Dans ce cas particulier, le nombre d'enceintes en cours d'étape de récupération et le nombre d'enceintes en cours d'étape de diminution de la température sont obligatoirement égaux à 1.

Par conséquent, lorsque N=4, la durée de l'étape de dégivrage est égale à la moitié de la durée de l'étape de givrage, tandis que les durées des étapes de récupération et de diminution de la température sont chacune égales à un quart de la durée de l'étape de givrage.

La commande de l'ensemble des vannes du système d'extraction selon la figure 3 et le tableau 1 permet de stabiliser les différents débits mis en jeu, à savoir le débit des mélanges gazeux dans chacune des enceintes du système d'extraction, les débits des fluides frigorigènes de givrage et de dégivrage dans chacun des échangeurs, ainsi que le débits de la substance récupérée en phase liquide depuis les différentes enceintes.

On peut ainsi obtenir une répartition constructale de ces trois débits dans le système d'extraction, c'est-à-dire une division par deux de ceux-ci.

On notera cependant que dans le cas où N est un entier égal à une puissance de 2 et que N est supérieur ou égal à 8, plusieurs configurations sont possibles concernant le nombre d'enceintes effectuant les étapes de dégivrage et de diminution de la température (cela est vrai également pour d'autres valeurs de N).

Comme expliqué précédemment, lorsque plusieurs configurations sont possibles, il n'est pas obligatoire de sélectionner celle correspondant à un séquencement constructale des étapes de fonctionnement dans les enceintes du système d'extraction.

Le choix d'une configuration parmi celles possibles peut se faire de manière aléatoire ou en fonction de certaines contraintes du système d'extraction.

On constate, par ailleurs, que lorsque N=4, le rapport N'/N est égal à la valeur maximale ½.

Nous allons à présent décrire, en référence à la **figure 4****,** un exemple de procédé d'extraction selon l'invention dans le cas où N=6.

Plus particulièrement, la figure 4 représente, sous la forme d'un tableau, les différentes étapes de fonctionnement réalisées successivement et de manière cyclique pour chacun des douze échangeurs (notés A' à L') d'un système d'extraction.

Ce cas diffère du cas de la figure 3 en ce que l'entier N est un nombre pair mais n'est pas égal à une puissance de deux.

Conformément à l'invention, le nombre d'enceintes (et d'échangeurs) en cours d'étape de givrage est égal au nombre total d'enceintes en cours d'étape de dégivrage, de récupération et de diminution de la température.

Plus particulièrement, dans ce cas particulier, on a tout au long du procédé :
- N=6 enceintes en cours d'étape de givrage ; et
- (N/2)-1=2 enceintes en cours d'étape de dégivrage.

En outre, dans ce cas particulier, le système d'extraction est configuré de manière à ce qu'il y ait, tout au long du procédé, deux enceintes en cours d'étape de récupération et deux enceintes en cours d'étape de diminution de la température.

Par conséquent, les durées des étapes de dégivrage, de récupération et de diminution de la température sont chacune égales à un tiers de la durée de l'étape de givrage.

La **figure 5** représente, sous la forme d'un tableau, un exemple de répartition des étapes de fonctionnement du procédé d'extraction dans un système d'extraction comportant six échangeurs.

Par conséquent, N=3 et N est un entier impair.

Plus particulièrement, dans ce cas particulier, on a tout au long du procédé :
- N=3 enceintes en cours d'étape de givrage ; et
- (N-1)/2=1 enceinte en cours d'étape de dégivrage.

Dans ce cas particulier, le système d'extraction comporte nécéssairement une enceinte en cours d'étape de récupération et une enceinte en cours d'étape de diminution de la température, et ce tout au long du procédé d'extraction.

Cela signifie que les durées des étapes de dégivrage, de récupération et de diminution de la température sont chacune égales à un tiers de la durée de l'étape de givrage.

Par ailleurs, on constate que le rapport N'/N est ici égal à un tiers, c'est-à-dire à la valeur minimale du rapport N'/N possible.

De manière générale, le nombre d'échangeurs 2N (N étant supérieur ou égal à 3) compris dans un système d'extraction selon l'invention est choisi pour des raisons de conception spécifique liées à la taille des installations.

Par ailleurs, on peut envisager de programmer un automate afin que celui-ci commande l'ouverture ou la fermeture des différentes vannes du système d'extraction selon l'invention.

L'automate peut être programmé de manière à respecter le séquencement des étapes de fonctionnement tel que décrit, par exemple, en référence aux figures 3, 4 et 5.

Cet automate pourra également commander des moyens de mesure pour réaliser une étape préliminaire EX telle que décrite en référence à la figure 2.

## Revendications

1. Procédé d'extraction d'une substance comprise dans un mélange gazeux, dans un système d'extraction comportant :
un premier circuit d'alimentation pour l'alimentation d'un fluide frigorigène de givrage ou d'un fluide frigoporteur (1210, 121, 120, 1200) ;
un deuxième circuit d'alimentation pour l'alimentation d'un fluide frigorigène de dégivrage ou d'un fluide caloporteur (1100, 110, 111, 1110) ;
un troisième circuit d'alimentation pour l'alimentation du mélange gazeux (1000) ; et
2N enceintes (AA, BB, CC, DD), N étant un entier supérieur ou égal à 3, chaque enceinte (AA) comportant :
- un échangeur (A) pouvant être relié alternativement audit premier circuit d'alimentation par une première paire de vannes (A121, A120), d'une part, et audit second circuit d'alimentation par une seconde paire de vannes (A110, A111), d'autre part ;
- une troisième paire de vannes (A100, A101) connectant une entrée et une sortie de l'enceinte audit troisième circuit d'alimentation, ladite troisième paire de vannes étant apte à contrôler la circulation dudit mélange gazeux sur l'échangeur à l'intérieur de l'enceinte ; et
- une vanne d'évacuation (A130) permettant l'évacuation d'une phase gazeuse résiduelle ou d'un liquide associé à sa phase gazeuse qui sont susceptibles de s'accumuler dans l'enceinte ;
le traitement du mélange gazeux dans chacune des enceintes comportant, de façon cyclique, les étapes successives suivantes :
- une étape de givrage (EG), effectuée à une première température d'échangeur sous une première pression d'enceinte, permettant le passage direct de la substance de l'état gazeux à l'état solide, formant ainsi un dépôt solide de la substance sur l'échangeur, lesdites première (A121, A120) et troisième (A100, A101) paires de vannes étant fermées à la fin de ladite étape de givrage ;
- une étape de dégivrage (ED) comprenant la fermeture de l'enceinte et permettant le passage direct dudit dépôt solide à l'état gazeux puis le passage direct dudit dépôt solide à l'état liquide lorsque la température de l'échangeur et la pression dans l'enceinte deviennent respectivement supérieurs à la température et à la pression du point triple de la substance, accumulant ainsi la phase liquide de la substance dans l'enceinte, ladite seconde paire de vannes (A110, A111) étant fermée à la fin de ladite étape de dégivrage ;
- une étape de récupération (ER) comprenant l'ouverture de ladite vanne d'évacuation (A130) et permettant, d'une part, d'extraire ladite phase liquide et la phase gazeuse résiduelle qui se sont accumulées dans l'enceinte, et d'autre part, simultanément, de diminuer la pression dans l'enceinte de façon à ce qu'elle revienne à ladite première pression;
- une étape de diminution de la température (ET) de l'échangeur comprenant l'ouverture de ladite première paire de vannes de façon à ce que la température de l'échangeur revienne à ladite première température ;
le procédé comprenant en outre une étape générale de séquencement visant à séquencer le passage d'une étape à l'autre dans chacune des enceintes pour que le nombre d'enceintes en cours d'étape de givrage d'une part, et le nombre total d'enceintes en cours d'étape de dégivrage, de récupération et de diminution de la température d'autre part, soient tout deux égaux à N, dans lequel, après un premier cycle, les deux conditions suivantes sont satisfaites tout au long dudit procédé :
- chacune desdites étapes de givrage, de dégivrage, de récupération et de diminution de la température est réalisée dans au moins une desdites enceintes, et
- chacune des enceintes réalise l'une desdites étapes selon ladite étape de séquencement.

2. Procédé selon la revendication 1 dans lequel ladite étape de givrage comprend une sous-étape (MSV) de mise sous vide de l'enceinte après la fermeture desdites première (A121, A120) et troisième (A100, A101) paires de vannes.

3. Procédé selon la revendication 1 ou 2, dans lequel, après un premier cycle, le nombre d'enceintes en cours d'étape de dégivrage est égal à N/2 si N est égal à une puissance de deux.

4. Procédé selon la revendication 1 ou 2, dans lequel, après un premier cycle, le nombre d'enceintes en cours d'étape de dégivrage est égal à (N/2)-1 si N est pair et n'est pas égal à une puissance de deux.

5. Procédé selon la revendication 1 ou 2, dans lequel, après un premier cycle, le nombre d'enceintes en cours d'étape de dégivrage est égal à (N-1)/2 si N est impair.

6. Procédé selon l'une quelconque des revendications 1 à 5, dans lequel la durée de ladite étape de givrage est égale à la durée cumulée desdites étapes de dégivrage, de récupération et de diminution de la température.

7. Procédé selon la revendication 6, le procédé d'extraction comprenant en outre une étape préliminaire (EX) de détermination de la durée de l'étape de givrage, la durée de l'étape de givrage étant déterminée à partir de la mesure d'une perte de charge maximale entre l'entrée et la sortie de l'enceinte pendant une étape de givrage.

8. Programme d'ordinateur comportant des instructions pour l'exécution des étapes du procédé d'extraction selon l'une quelconque des revendications 1 à 7, lorsque ledit programme est exécuté par un ordinateur.

9. Support d'enregistrement lisible par un ordinateur sur lequel est enregistré un programme d'ordinateur comprenant des instructions pour l'exécution des étapes du procédé d'extraction selon l'une quelconque des revendications 1 à 7.

10. Système d'extraction d'une substance comprise dans un mélange gazeux, le système d'extraction comportant :
un premier circuit d'alimentation pour l'alimentation d'un fluide frigorigène de givrage ou d'un fluide frigoporteur (1210, 1221, 120, 1200) ;
un deuxième circuit d'alimentation pour l'alimentation d'un fluide frigorigène de dégivrage ou d'un fluide caloporteur (1100, 110, 111, 1110) ;
un troisième circuit d'alimentation pour l'alimentation du mélange gazeux (1000) ; et
2N enceintes (AA, BB, CC, DD), N étant un entier supérieur ou égal à 3, chaque enceinte (AA) comportant :
- un échangeur (A) pouvant être relié audit premier circuit d'alimentation par une première paire de vannes (A121, A120), d'une part, et audit second circuit d'alimentation par une seconde paire de vannes (A110, A111), d'autre part ;
- une troisième paire de vannes (A100, A101) connectant une entrée et une sortie de l'enceinte audit troisième circuit d'alimentation, ladite troisième paire de vannes étant apte à contrôler la circulation dudit mélange gazeux sur l'échangeur à l'intérieur de l'enceinte ; et
- une vanne d'évacuation (A130) permettant l'évacuation d'une phase gazeuse résiduelle ou d'un liquide associé à sa phase gazeuse qui sont susceptibles de s'accumuler dans l'enceinte ;
le système d'extraction comprenant en outre des moyens de contrôle pour contrôler l'ouverture et la fermeture de chacune desdites vannes de façon à réaliser un procédé d'extraction comprenant, de manière cyclique, les étapes successives suivantes :
- une étape de givrage (EG), effectuée à une première température d'échangeur sous une première pression d'enceinte, permettant le passage direct de la substance de l'état gazeux à l'état solide, formant ainsi un dépôt solide de la substance sur l'échangeur, lesdites première (A121, A120) et troisième (A100, A101) paires de vannes étant fermées à la fin de ladite étape de givrage ;
- une étape de dégivrage (ED) comprenant la fermeture de l'enceinte et permettant le passage direct dudit dépôt solide à l'état gazeux puis le passage direct dudit dépôt solide à l'état liquide lorsque la température de l'échangeur et la pression dans l'enceinte deviennent respectivement supérieurs à la température et à la pression du point triple de la substance, accumulant ainsi la phase liquide de la substance dans l'enceinte, ladite seconde paire de vannes (A110, A111) étant fermée à la fin de ladite étape de dégivrage;
- une étape de récupération (ER) comprenant l'ouverture de ladite vanne d'évacuation (A130) et permettant, d'une part, d'extraire ladite phase liquide et la phase gazeuse résiduelle qui se sont accumulées dans l'enceinte, et d'autre part, simultanément, de diminuer la pression dans l'enceinte de façon à ce qu'elle revienne à ladite première pression;
- une étape de diminution de la température (ET) de l'échangeur comprenant l'ouverture de ladite première paire de vannes de façon à ce que la température de l'échangeur revienne à ladite première température ;
lesdits moyens de contrôle étant configurés pour que chaque échangeur soit relié alternativement auxdits premier et second circuits d'alimentation,
lesdits moyens de contrôle étant en outre configurés pour séquencer le passage d'une étape à l'autre dans chacune des enceintes pour que le nombre d'enceintes en cours d'étape de givrage d'une part, et le nombre total d'enceintes en cours d'étape de dégivrage, de récupération et de diminution de la température d'autre part, soient tout deux égaux à N,
dans lequel les moyens de contrôle sont également configurés pour que, après un premier cycle, les conditions suivantes soient satisfaites tout au long dudit procédé :
- chacune desdites étapes de givrage, de dégivrage, de récupération et de diminution de la température est réalisée dans au moins une desdites enceintes, et
- chacune desdites enceintes réalise l'une desdites étapes selon ladite étape de séquencement.

11. Procédé selon la revendication 10 dans lequel lesdits moyens de contrôle sont en outre configurés pour que ladite étape de givrage comprenne une sous-étape (MSV) de mise sous vide de l'enceinte après ladite fermeture des première (A121,A120) et troisième (A100, A101) paires de vannes.

12. Système d'extraction selon la revendication 10 ou 11, dans lequel, après un premier cycle, le nombre d'enceintes en cours d'étape de dégivrage est égal à N/2 si N est égal à une puissance de deux.

13. Système d'extraction selon la revendication 10 ou 11, dans lequel, après un premier cycle, le nombre d'enceintes en cours d'étape de dégivrage est égal à (N/2)-1 si N est pair et n'est pas égal à une puissance de deux.

14. Système d'extraction selon la revendication 10 ou 11, dans lequel, après un premier cycle, le nombre d'enceintes en cours d'étape de dégivrage est égal à (N-1)/2 si N est impair.

15. Système d'extraction selon l'une quelconque des revendications 10 à 14, dans lequel la durée de ladite étape de givrage est égale à la durée cumulée desdites étapes de dégivrage, de récupération et de diminution de la température.

16. Système d'extraction selon l'une quelconque des revendications 10 à 15, le procédé d'extraction comprenant en outre une étape préliminaire (EX) de détermination de la durée de l'étape de givrage, la durée de l'étape de givrage étant déterminée à partir de la mesure d'une perte de charge maximale entre l'entrée et la sortie de l'enceinte pendant une étape de givrage.

## Patentansprüche

1. Verfahren zur Extraktion eines Stoffes, der in einem gasförmigen Gemisch enthalten ist, in einem Extraktionssystem, umfassend:
einen ersten Versorgungskreislauf zur Zuführung eines Vereisungsmittels oder eines Kältemittels (1210, 121, 120, 1200),
einen zweiten Versorgungskreislauf zur Zuführung eines Enteisungsmittels oder eines Kühlmittels (1100, 110, 111, 1110),
einen dritten Versorgungskreislauf zur Zuführung des gasförmigen Gemisches (1000), und
2N Räume (AA, BB, CC, DD), wobei N eine ganze Zahl größer oder gleich 3 ist, wobei jeder Raum (AA) umfasst:
- einen Wärmetauscher (A), der alternativ mit dem ersten Versorgungskreislauf durch ein erstes Ventilpaar (A121, A120) einerseits und mit dem zweiten Versorgungskreislauf durch ein zweites Ventilpaar (A110, A111) andererseits verbunden werden kann,
- ein drittes Ventilpaar (A100, A101), das einen Eingang und einen Ausgang des Raums mit dem dritten Versorgungskreislauf verbindet, wobei das dritte Ventilpaar geeignet ist, die Zirkulation des gasförmigen Gemisches auf dem Wärmetauscher innerhalb des Raums zu steuern, und
- ein Ableitungsventil (A130), das die Ableitung einer Restgasphase oder einer mit ihrer Gasphase verbundenen Flüssigkeit, die sich in dem Raum ansammeln können, ermöglicht,
wobei die Behandlung des gasförmigen Gemisches in jedem der Räume zyklisch nacheinander die folgenden Schritte umfasst:
- einen Vereisungsschritt (EG), der bei einer ersten Wärmetauschertemperatur unter einem ersten Raumdruck durchgeführt wird und den direkten Übergang des Stoffes vom gasförmigen Zustand in den festen Zustand ermöglicht, wodurch ein festes Depot des Stoffes auf dem Wärmetauscher gebildet wird, wobei die ersten (A121, A120) und dritten (A100, A101) Ventilpaare am Ende des Vereisungsschrittes geschlossen werden,
- einen Enteisungsschritt (ED), der das Schließen des Raums umfasst und den direkten Übergang des festen Depots in den gasförmigen Zustand und dann den direkten Übergang des festen Depots in den flüssigen Zustand ermöglicht, wenn die Temperatur des Wärmetauschers und der Druck in dem Raum größer als die Temperatur bzw. der Druck des Tripelpunktes des Stoffes werden, wodurch die flüssige Phase des Stoffes in dem Raum angesammelt wird, wobei das zweite Ventilpaar (A110, A111) am Ende des Enteisungsschrittes geschlossen wird,
- einen Wiedergewinnungsschritt (ER), der das Öffnen des Ableitungsventils (A130) umfasst und es einerseits ermöglicht, die flüssige Phase und die Restgasphase, die sich in dem Raum angesammelt haben, zu extrahieren, und andererseits gleichzeitig den Druck in dem Raum zu verringern, so dass dieser wieder zum ersten Druckwert zurückkehrt,
- einen Schritt der Verminderung der Temperatur (ET) des Wärmetauschers, umfassend das Öffnen des ersten Ventilpaars, so dass die Temperatur des Wärmetauschers wieder zur ersten Temperatur zurückkehrt,
wobei das Verfahren ferner einen allgemeinen Sequenzierungsschritt umfasst, der den Übergang von einem Schritt zum anderen in jedem der Räume sequenzieren soll, so dass die Anzahl von Räumen während des Vereisungsschrittes einerseits und die Gesamtanzahl von Räumen während des Enteisungs-, Wiedergewinnungs- und Temperaturverminderungsschrittes andererseits beide gleich N sind, wobei nach einem ersten Zyklus die beiden folgenden Bedingungen während des gesamten Verfahrens eingehalten werden:
- jeder der Schritte der Vereisung, Enteisung, Wiedergewinnung und Temperaturverminderung erfolgt in mindestens einem der Räume, und
- jeder der Räume führt einen der Schritte nach dem Sequenzierungsschritt durch.

2. Verfahren nach Anspruch 1, bei dem der Vereisungsschritt einen Unterschritt (MSV) des Setzens des Raums unter Vakuum nach dem Schließen der ersten (A121, A120) und dritten (A100, A101) Ventilpaare umfasst.

3. Verfahren nach Anspruch 1 oder 2, bei dem nach einem ersten Zyklus die Anzahl von Räumen während des Enteisungsschrittes gleich N/2 ist, wenn N gleich einer Leistung von zwei ist.

4. Verfahren nach Anspruch 1 oder 2, bei dem nach einem ersten Zyklus die Anzahl von Räumen während des Enteisungsschrittes gleich (N/2)-1 ist, wenn N gerade und nicht gleich einer Leistung von zwei ist.

5. Verfahren nach Anspruch 1 oder 2, bei dem nach einem ersten Zyklus die Anzahl von Räumen während des Enteisungsschrittes gleich (N-1)/2 ist, wenn N ungerade ist.

6. Verfahren nach einem der Ansprüche 1 bis 5, bei dem die Dauer des Vereisungsschrittes gleich der kumulierten Dauer der Schritte der Enteisung, Wiedergewinnung und Temperaturverminderung ist.

7. Verfahren nach Anspruch 6, wobei das Extraktionsverfahren ferner einen vorherigen Schritt (EX) der Bestimmung der Dauer des Vereisungsschrittes umfasst, wobei die Dauer des Vereisungsschrittes durch das Messen eines maximalen Lastverlustes zwischen dem Eingang und dem Ausgang des Raums während eines Vereisungsschrittes bestimmt wird.

8. Computerprogramm, umfassend Instruktionen für die Ausführung der Schritte des Extraktionsverfahrens nach einem der Ansprüche 1 bis 7.

9. Speicherträger, der von einem Computer lesbar ist, auf dem ein Computerprogramm gespeichert ist, umfassend Instruktionen für die Ausführung der Schritte des Extraktionsverfahrens nach einem der Ansprüche 1 bis 7.

10. System zur Extraktion eines Stoffes, der in einem gasförmigen Gemisch enthalten ist, wobei das Extraktionssystem umfasst:
einen ersten Versorgungskreislauf zur Zuführung eines Vereisungsmittels oder eines Kältemittels (1210, 1221, 120, 1200),
einen zweiten Versorgungskreislauf zur Zuführung eines Enteisungsmittels oder eines Kühlmittels (1100, 110, 111, 1110),
einen dritten Versorgungskreislauf zur Zuführung des gasförmigen Gemisches (1000), und
2N Räume (AA, BB, CC, DD), wobei N eine ganze Zahl größer oder gleich 3 ist, wobei jeder Raum (AA) umfasst:
- einen Wärmetauscher (A), der alternativ mit dem ersten Versorgungskreislauf durch ein erstes Ventilpaar (A121, A120) einerseits und mit dem zweiten Versorgungskreislauf durch ein zweites Ventilpaar (A110, A111) andererseits verbunden werden kann,
- ein drittes Ventilpaar (A100, A101), das einen Eingang und einen Ausgang des Raums mit dem dritten Versorgungskreislauf verbindet, wobei das dritte Ventilpaar geeignet ist, die Zirkulation des gasförmigen Gemisches auf dem Wärmetauscher innerhalb des Raums zu steuern, und
- ein Ableitungsventil (A130), das die Ableitung einer Restgasphase oder einer mit ihrer Gasphase verbundenen Flüssigkeit, die sich in dem Raum ansammeln `können, ermöglicht,
wobei das Extraktionssystem ferner Steuermittel umfasst, um das Öffnen und Schließen jedes der Ventile zu steuern, um ein Extraktionsverfahren durchzuführen, das zyklisch nacheinander die folgenden Schritte umfasst:
- einen Vereisungsschritt (EG), der bei einer ersten Wärmetauschertemperatur unter einem ersten Raumdruck durchgeführt wird und den direkten Übergang des Stoffes vom gasförmigen Zustand in den festen Zustand ermöglicht, wodurch ein festes Depot des Stoffes auf dem Wärmetauscher gebildet wird, wobei die ersten (A121, A120) und dritten (A100, A101) Ventilpaare am Ende des Vereisungsschrittes geschlossen werden,
- einen Enteisungsschritt (ED), der das Schließen des Raums umfasst und den direkten Übergang des festen Depots in den gasförmigen Zustand und dann den direkten Übergang des festen Depots in den flüssigen Zustand ermöglicht, wenn die Temperatur des Wärmetauschers und der Druck in dem Raum größer als die Temperatur bzw. der Druck des Tripelpunktes des Stoffes werden, wodurch die flüssige Phase des Stoffes in dem Raum angesammelt wird, wobei das zweite Ventilpaar (A110, A111) am Ende des Enteisungsschrittes geschlossen wird,
- einen Wiedergewinnungsschritt (ER), der das Öffnen des Ableitungsventils (A130) umfasst und es einerseits ermöglicht, die flüssige Phase und die Restgasphase, die sich in dem Raum angesammelt haben, zu extrahieren, und andererseits gleichzeitig den Druck in dem Raum zu verringern, so dass dieser wieder zum ersten Druckwert zurückkehrt,
- einen Schritt der Verminderung der Temperatur (ET) des Wärmetauschers, umfassend das Öffnen des ersten Ventilpaars, so dass die Temperatur des Wärmetauschers wieder zur ersten Temperatur zurückkehrt,
wobei die Steuermittel derart ausgeführt sind, dass jeder Wärmetauscher alternativ mit dem ersten und dem zweiten Versorgungskreislauf verbunden wird, wobei die Steuermittel ferner derart ausgeführt sind, dass sie den Übergang von einem Schritt zum anderen in jedem der Räume sequenzieren, so dass die Anzahl von Räumen während des Vereisungsschrittes einerseits und die Gesamtanzahl von Räumen während des Enteisungs-, Wiedergewinnungs- und Temperaturverminderungsschrittes andererseits beide gleich N sind,
wobei die Steuermittel auch *derart* ausgeführt sind, dass nach einem ersten Zyklus die beiden folgenden Bedingungen während des gesamten Verfahrens eingehalten werden:
- jeder der Schritte der Vereisung, Enteisung, Wiedergewinnung und Temperaturverminderung erfolgt in mindestens einem der Räume, und
- jeder der Räume führt einen der Schritte nach dem Sequenzierungsschritt durch.

11. Verfahren nach Anspruch 10, bei dem die Steuermittel ferner derart ausgeführt sind, dass der Vereisungsschritt einen Unterschritt (MSV) des Setzens des Raums unter Vakuum nach dem Schließen der ersten (A121, A120) und dritten (A100, A101) Ventilpaare umfasst.

12. Extraktionssystem nach Anspruch 10 oder 11, bei dem nach einem ersten Zyklus die Anzahl von Räumen während des Enteisungsschrittes gleich N/2 ist, wenn N gleich einer Leistung von zwei ist.

13. Extraktionssystem nach Anspruch 10 oder 11, bei dem nach einem ersten Zyklus die Anzahl von Räumen während des Enteisungsschrittes gleich (N/2)-1 ist, wenn N gerade und nicht gleich einer Leistung von zwei ist.

14. Extraktionssystem nach Anspruch 10 oder 11, bei dem nach einem ersten Zyklus die Anzahl von Räumen während des Enteisungsschrittes gleich (N-1)/2 ist, wenn N ungerade ist.

15. Extraktionssystem nach einem der Ansprüche 10 bis 14, bei dem die Dauer des Vereisungsschrittes gleich der kumulierten Dauer der Schritte der Enteisung, Wiedergewinnung und Temperaturverminderung ist.

16. Extraktionssystem nach einem der Ansprüche 10 bis 15, wobei das Extraktionsverfahren ferner einen vorherigen Schritt (EX) der Bestimmung der Dauer des Vereisungsschrittes umfasst, wobei die Dauer des Vereisungsschrittes durch das Messen eines maximalen Lastverlustes zwischen dem Eingang und dem Ausgang des Raums während eines Vereisungsschrittes bestimmt wird.

## Claims

1. A method of extracting a substance comprised in a gaseous mixture, in an extraction system comprising:
a first supply circuit for supplying a refrigerant fluid for frosting or a coolant fluid (1210, 121, 120, 1200);
a second supply circuit for supplying a refrigerant fluid for defrosting or a heat-transfer fluid (1100, 110, 111, 1110);
· a third supply circuit for supplying a gaseous mixture (1000); and
· 2N chambers (AA, BB, CC, DD), N being an integer greater than or equal to three;
each chamber AA comprising:
• a heat-exchanger (A) that can be alternately connected to said first supply circuit via a first pair of valves (A121, A120), and to said second supply circuit via a second pair of valves (A110, A111);
• a third pair of valves (A100, A101) connecting an inlet and an outlet of the chamber to the third supply circuit, the third pair of valves being capable of controlling movement of the gaseous mixture over the heat-exchanger inside the chamber; and
• an evacuation valve (A130) to evacuate a residual gas phase or a liquid associated with its gas phase that might accumulate in said chamber;
the treatment of the gaseous mixture in each of the chambers comprising, in a cyclic manner, the following steps in succession:
• a frosting step (FS), carried out at a first heat-exchanger temperature at a first chamber pressure, allowing the substance to pass directly from the gaseous state to the solid state, thereby forming a solid deposit of the substance on the heat-exchanger, said first (A121, A120) and the third (A100, A101) pairs of valves being closed at the end of said frosting step;
• a defrosting step (DS), comprising closing the chamber and allowing the solid deposit to pass directly into the gaseous state then allowing the solid deposit to pass directly into the liquid state when the temperature of the heat-exchanger and the pressure in the chamber become respectively higher than the temperature and the pressure of the triple point of the substance, thereby accumulating the liquid phase of the substance in the chamber, the second pair of valves (A110, A111) being closed at the end of the defrosting step;
• a recovery step (RS), comprising opening said evacuation valve (A130) so as both to allow the liquid phase and the residual gas phase that have accumulated in the chamber to be extracted, and also, simultaneously to reduce the pressure in the chamber so that it returns to said first pressure; and
• a step (TS) for reducing the temperature of the heat-exchanger, comprising opening said first pair of valves so that the temperature of the heat-exchanger returns to the first temperature;
the method further comprising a general sequencing step aimed at sequencing the passage from one step to another in each of the chambers such that the number of chambers undergoing the frosting step and also the total number of chambers undergoing the defrosting, recovery, and temperature-reduction steps are both equal to N, wherein, after a first cycle, the following two conditions are satisfied throughout said method:
• each of said frosting, defrosting, recovery, and temperature-reduction steps is carried out in at least one of said chambers; and
• each of the chambers carries out one of said steps as dictated by the sequencing step.

2. The method as claimed in claim 1, wherein said frosting step comprises a sub-step (VSS) for placing the chamber under vacuum after closing said first (A121, A120) and third (A100, A101) pairs of valves.

3. The method as claimed in claim 1 or claim 2 wherein after a first cycle, the number of chambers carrying out the defrosting step is equal to N/2 if N is equal to a power of two.

4. The method as claimed in claim 1 or claim 2 wherein after a first cycle, the number of chambers carrying out the defrosting step is equal to (N/2)-1 if N is even and is not equal to a power of two.

5. The method as claimed in claim 1 or claim 2, wherein after a first cycle, the number of chambers carrying out the defrosting step is equal to (N-1)/2 if N is odd.

6. The method as claimed in any one of claims 1 to 5, wherein the duration of said frosting step is equal to the cumulative duration of said defrosting, recovery, and temperature-reduction steps.

7. The method as claimed in claim 6, wherein the extraction method further comprises a preliminary step (EX) for determining the duration of the frosting step, the duration of the frosting step being determined from a measurement of the maximum pressure drop between the inlet and the outlet of the chamber during a frosting step.

8. A computer program comprising instructions for executing the steps of an extraction method as claimed in any one of claims 1 to 7, when said program is executed by a computer.

9. A computer-readable recording support on which a computer program comprising instructions for executing the steps of the extraction method as claimed in any one of claims 1 to 7 is recorded.

10. A system for extracting a substance comprised in a gaseous mixture, the extraction system comprising:
· a first supply circuit for supplying a refrigerant fluid for frosting or a coolant fluid (1210, 1221, 120, 1200);
· a second supply circuit for supplying a refrigerant fluid for defrosting or a heat-transfer fluid (1100, 110, 111, 1110);
· a third supply circuit for supplying a gaseous mixture (1000); and
· 2N chambers (AA, BB, CC, DD), N being an integer greater than or equal to three;
each chamber AA comprising:
• a heat-exchanger (A) that is capable of being connected both to said first supply circuit via a first pair of valves (A121, A120) and also to said second supply circuit via a second pair of valves (A110, A111);
• a third pair of valves (A100, A101) connecting an inlet and an outlet of the chamber to said third supply circuit, said third pair of valves being capable of controlling movement of said gaseous mixture over the heat-exchanger inside the chamber; and
• an evacuation valve (A130) to evacuate a residual gas phase or a liquid associated with its gas phase that might accumulate in the chamber;
the extraction system further comprising control means to control the opening and closing of each of said valves in order to carry out an extraction method comprising, in a cyclic manner, the following steps in succession:
• a frosting step (FS), carried out at a first heat-exchanger temperature at a first chamber pressure, allowing the substance to pass directly from the gaseous state to the solid state, thereby forming a solid deposit of the substance on the heat-exchanger, said first (A121, A120) and third (A100, A101) pairs of valves being closed at the end of said frosting step;
• a defrosting step (DS), comprising closing the chamber and allowing said solid deposit to pass directly into the gaseous state then allowing said solid deposit to pass directly into the liquid state when the temperature of the heat-exchanger and the pressure in the chamber become respectively higher than the temperature and the pressure of the triple point of the substance, thereby accumulating the liquid phase of the substance in the chamber, said second pair of valves (A110, A111) being closed at the end of said defrosting step;
• a recovery step (RS), comprising opening said evacuation valve (A130) so as both to allow said liquid phase and the residual gas phase that have accumulated in the chamber to be extracted, and also, simultaneously to reduce the pressure in the chamber so that it returns to said first pressure; and
• a temperature-reduction step of reducing the temperature of the heat-exchanger (TS), comprising opening said first pair of valves so that the temperature of the heat-exchanger returns to said first temperature;
said control means being configured such that each heat-exchanger is alternately connected to said first and second supply circuits;
said control means also being configured to sequence passage from one step to another in each of the chambers such that the number of chambers carrying out the frosting step and also the total number of chambers carrying out the defrosting, recovery, and temperature-reduction steps are both equal to N; and
wherein which the control means are also configured such that, after a first cycle, the following two conditions are satisfied throughout said method:
• each of said steps of frosting, defrosting, recovery and temperature reduction is carried out in at least one of said chambers; and
• each of said chambers carries out one of said steps as dictated by said sequencing step.

11. A method according to claim 10, wherein said control means are also configured such that said frosting step comprises a sub-step (VSS) for placing the chamber under vacuum after said closure of the first (A121, A120) and third (A100, A101) pairs of valves.

12. An extraction system as claimed in claim 10 or claim 11 wherein, after a first cycle, the number of chambers carrying out the defrosting step is equal to N/2 if N is equal to a power of two.

13. An extraction system as claimed in claim 10 or claim 11 wherein, after a first cycle, the number of chambers carrying out the defrosting step is equal to (N/2)-1 if N is even and is not equal to a power of two.

14. An extraction system as claimed in claim 10 or claim 11 wherein, after a first cycle, the number of chambers carrying out the defrosting step is equal to (N-1)/2 if N is odd.

15. An extraction system as claimed in any one of claims 10 to 14, wherein the duration of said frosting step is equal to the cumulative duration of said defrosting, recovery, and temperature-reduction steps.

16. An extraction system as claimed in any one of claims 10 to 15, the extraction method further comprising a preliminary step (EX) for determining the duration of the frosting step, the duration of the frosting step being determined from a measurement of a maximum pressure drop between the inlet and the outlet of the chamber during a frosting step.
